(19) Europäisches Patentamt
European Patent Office
Office européen des brevets

(11) Veröffentlichungsnummer: **0 044 995**
**A1**

# (12) EUROPÄISCHE PATENTANMELDUNG

(21) Anmeldenummer: **81105456.8**

(22) Anmeldetag: **13.07.81**

(51) Int. Cl.³: **D 06 L 3/12**, C 08 F 261/04

(30) Priorität: **23.07.80 DE 3027829**

(43) Veröffentlichungstag der Anmeldung: **03.02.82**
**Patentblatt 82/5**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Friedrich, Herbert, Dr., Stettiner Strasse 95, D-6056 Heusenstamm (DE)**
Erfinder: **Martini, Thomas, Dr., Odenwaldstrasse 5, D-6233 Kelkheim (DE)**
Erfinder: **Riegel, Ulrich, Steinäckerstrasse 6, D-6000 Frankfurt am Main 61 (DE)**
Erfinder: **Engelhardt, Friedrich, Dr., Hünfelder Strasse 20, D-6000 Frankfurt am Main 61 (DE)**

(74) Vertreter: **Urbach, Hans-Georg, Dr., Hanauer Landstrasse 526, D-6000 Frankfurt am Main 61 (DE)**

## (54) Dispersionen optischer Aufheller enthaltend Pfropfpolymere des PVA und die neuen Pfropfpolymere.

(57) Wäßrige Zubereitungen optischer Aufheller, enthaltend bekannte in Wasser schwer lösliche oder unlösliche Aufhellerwirkstoffe und übliche Hilfsmittel wie z.B. Dispergier- bzw. Emulgiermittel, Carrier, Klotzhilfsmittel, Fungizide, Oxydantien, die als Hilfsmittel ein Pfropfpolymerisat von Vinylverbindungen der Formel I

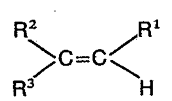

(I)

worin $R^1$, $R^2$ und $R^3$ die im Anspruch 1 angegebenen Bedeutungen haben, auf Polyvinylalkohole enthalten, neue Pfropfpolymerisate der genannten Art sowie ein Verfahren zum optischen Aufhellen synthetischer Materialien, vorzugsweise Fasermaterialien, unter Verwendung der genannten Pfropfpolymerisate bzw. der erfindungsgemäßen Dispersionen wasserunlöslicher optischer Aufheller.

EP 0 044 995 A1

COMPLETE DOCUMENT

ACTORUM AG

Dispersionen optischer Aufheller enthaltend Pfropfpolymere des PVA und die neuen Pfropfpolymeren

Die vorliegende Erfindung betrifft neue technisch vorteilhafte wäßrige Zubereitungen (Dispersionen) in Wasser schwer löslicher oder wasserunlöslicher optischer Aufheller, die Pfropfpolymerisate von Vinylverbindungen der Formel I

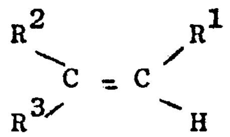

(I)

worin $R^1$, $R^2$ und $R^3$ die im Anspruch 1 angegebenen Bedeutungen haben, auf Polyvinylalkohole enthalten, neue Pfropfpolymerisate der genannten Art sowie ein Verfahren zum optischen Aufhellen synthetischer Materialien vorzugsweise Fasermaterialien unter Verwendung der genannten Pfropfpolymerisate bzw. der erfindungsgemäßen Dispersionen wasserunlöslicher optischer Aufheller.

Das optische Aufhellen von synthetischen oder halbsynthetischen hochmolekularen organischen Materialien, insbesondere Fasermaterialien erfolgt durch Färben der Materialien mit in Wasser schwer löslichen oder unlöslichen Aufhellerwirkstoffen nach den bei der Applikation von Dispersionsfarbstoffen üblichen Methoden. Im wesentlichen sind dies das Klotz-Thermosolverfahren, bei dem das Material (Substrat) mit einer Färbeflotte, enthaltend den Aufhellerwirkstoff in feinverteilter Form, getränkt, durch zwei Walzen auf eine bestimmte Gewichtszunahme abgequetscht, bei Temp. von 100 - 120°C kontinuierlich getrocknet und dann einer Hitzebehandlung bei 160-230°C, beispielsweise 30" 190°C, unterworfen wird, wobei der Aufheller auf dem Substrat fixiert wird und die Ausziehfärbeverfahren, bei denen das Substrat mit Färbeflotten, die 0.01-1.5 Gew.% Aufhellerwirksubstanz, bezogen auf das Warengewicht enthalten, bei Temperaturen von 90-140°C, erforderlichenfalls unter Überdruck während 30-45 Minuten behandelt wird.

Im allgemeinen werden den Färbeflotten noch weitere Hilfsmittel zugegeben, wie z.B. Netzmittel und Klotzhilfsmittel, damit die Färbeflotte die Ware besser benetzt und um gleichmäßigeren Ausfall der Färbungen zu erreichen.

Die Aufhellung synthetischer Fasern mit optischen Aufhellern muß kein eigenständiger Prozess sein. Oftmals wird die Aufhellung kombiniert mit Bleichprozessen, die entweder im sauren oder alkalischen Medium durchgeführt werden. Eine Aufhellerdispersion muß daher unter diesen verschiedenen pH-Bereichen stabil bleiben. Das ist der Grund, weshalb Aufhellerdispersionen für Synthesefasern meist mit nichtionischen Hilfs- oder Dispergiermitteln hergestellt werden. Von den verschiedenen hierfür vorgeschlagenen Produkten haben sich im wesentlichen die teilverseiften Polyvinylalkohole durchgesetzt.

Nun gibt es aber eine große Anzahl von Aufheller-Wirksubstanzen, die mit Polyvinylalkohol als Hilfs- und Dispergiermittel nicht das volle Weiß entwickeln.

Da aber die Wirksamkeit eines optischen Aufhellers, der in Form einer wässrigen Dispersion zur Anwendung gelangt, in erster Linie vom eingesetzten Hilfs- oder Dispergiermittel abhängt, hat es nicht an Versuchen gefehlt, Färbehilfsmittel in derartige Dispersionen einzuarbeiten bzw. überhaupt andere Hilfs- und Dispergiermittel zu verwenden.

Der Zusatz von Färbehilfsmitteln zu Aufhellerdispersionen ist wegen der Unverträglichkeit nichtionischer Dispergiermittel praktisch auf niedere Glycole beschränkt. So findet man in einigen Handelsdispersionen Ethylenglycol als Färbehilfsmittel.

Bei vielen optischen Aufhellern reichen jedoch auch diese Glycolzusätze nicht aus, auf der Faser das volle Weiß zu entwickeln.

Es sind auch bereits Aufhellerzubereitungen in den Handel gekommen, die frei sind von Polyvinylalkohol und die z.B.

Oxethylate (vgl. DOS 24 43 481 ) oder sulfatierte Oxethylate (vgl. DAS 27 45 449 ) enthalten.

Der Nachteil derartiger Formulierungen ist darin zu sehen, daß sie große Mengen Hilfsmittel enthalten müssen, was teilweise zu hohen Viskositäten derartiger Produkte führt. Oxethylate und deren Schwefelsäureester sind zwar - in hohen Mengen angewendet - gute Hilfsmittel für die versch. Klotz-Thermosolverfahren, sie versagen jedoch meist bei den Ausziehverfahren.

Daneben kennt man Färbehilfsmittel, die durch Polymerisation von α-β-ungesättigten Verbindungen erhalten werden. Solche Produkte sind z.B. erwähnt in den DOS 2 016 470, 2 628 878 und der DAS 27 34 204. Während diese Produkte im allgemeinen gute Hilfsmittel für die versch. Klotz-Thermosolverfahren sind, so versagen auch sie meist bei schwierig zu applizierenden Produkten in den verschiedenen Ausziehfärbeverfahren.

Bei der Applikation bestimmter optischer Aufheller haben alle bisher bekannt gewordenen Hilfsmittel versagt, und man mußte vollkommen neue Wege beschreiten. So beschreibt die Japan. OLS Sho 52-66782 ein Verfahren zum Aufhellen von PES mit Bis-benzoxazolstilbenverbindungen. In diesem Verfahren wird z.B. der Col. Ind. Optical Brightener Nr. I (im Folgenden kurz OB I genannt) zusammen mit Polyesterfasermaterial in einem organischen Lösungsmittel, z.B. halogenierten Kohlenwasserstoffen, auf Temperaturen bis 170°C erhitzt. Da eine Nachreinigung empfohlen wird, muß man annehmen, daß die Färbung nicht vollständig ist. Unseres Wissens ist noch kein Hilfsmittel bekannt geworden, das den OB I einer textilen Applikation zuführt.

Zur Ausprüfung im Laboratorium bedient man sich einer Färbemethode aus organischem Lösungsmittel, die in Beispiel 1 beschrieben wird. Die unverhältnismäßig hohen Mengen Lösungsmittel und Emulgatoren, die hierbei angewendet werden, entwickeln selbst Produkte zu vollem Weiß, die auf der Faser in üblichen Finishzubereitungen nur vergrünen. Es war daher Ziel

dieser vorliegenden Erfindung, Hilfsmittel zu finden, die diese Weißeffekte in einer praxisnahen Rezeptur in allen Färbeverfahren erreichen oder womöglich noch übertreffen.

Überraschenderweise wurde nun gefunden, daß bestimmte Pfropfpolymerisate von Vinylverbindungen auf Polyvinylalkohol die gewünschten Eigenschaften aufweisen und daher mit besonderem Vorteil als Hilfsmittel bei der Applikation von in Wasser schwerlöslichen oder wasserunlöslichen optischen Aufhellern auf synthetischen oder halbsynthetischen hochmolekularen organischen Materialien, insbesondere Fasermaterialien, oder deren Mischungen mit natürlichen hochmolekularen organischen Materialien eingesetzt werden können. Es handelt sich hierbei um Pfropfpolymerisate von Vinylverbindungen der Formel I

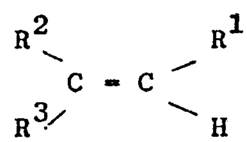
(I)

worin $R^1$ und $R^2$ Wasserstoff und $R^3$ eine Alkanoyloxygruppe mit 1-4 vorzugsweise 1-2 C-Atomen; eine Cyangruppe; ggf. durch Alkyl mit 1-4, vorzugsweise 1-2 C-Atomen oder Alkoxy mit 1-4 C-Atomen, vorzugsweise Methoxy substituiertes Phenyl; Carboxyl oder dessen Alkali oder Ammoniumsalz; eine Alkoxycarbonylgruppe der Formel II

$$-COOR^4 \qquad (II)$$

worin $R^4$ eine ggf. durch Hydroxygruppen substituierte Alkylgruppe mit 1-6, vorzugsweise 1-3 C-Atomenist; eine Amidocarbonylgruppe der Formel III

$$-CONR^5R^6 \qquad (III)$$

worin $R^5$ und $R^6$ voneinander unabhängig Wasserstoff oder ggf. durch Hydroxygruppen substituierte Alkylgruppen mit 1-4 C-Atomen sind, worin aber auch $R^5$ und $R^6$ gemeinsam eine ggf. durch >NH, Sauerstoff oder Schwefel unterbrochene 4 oder 5 gliedrige Polymethylenbrücke bilden können; eine Sulfoalkylamidocarbonylgruppe der Formel IV

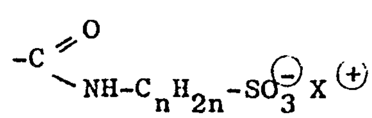
(IV)

worin n eine Zahl von 1 bis 6 und X ein Alkalimetall oder Ammonium ist; eine Alkanoylaminogruppe der Formel V

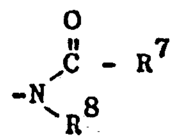

(V)

in der $R^7$ und $R^8$ unabhängig voneinander Wasserstoff oder gegebenenfalls durch Hydroxygruppen substituierte Alkylgruppen mit 1-4 C-Atomen bedeuten, worin aber auch $R^7$ und $R^8$ gemeinsam für eine 3-6 gliedrige Polymethylenbrücke stehen können; eine Sulfonsäuregruppe oder eine Phosphonsäuregruppe oder deren Alkali- oder Ammoniumsalz bedeuten oder worin $R^1$ Wasserstoff; $R^2$ Alkyl mit 1 - 4 C-Atomen; $R^3$ Carboxyl oder dessen Alkali- oder Ammoniumsalz; Alkoxycarbonyl der oben angegebenen Formel II; eine Amidocarbonylgruppe der oben angegebenen Formel III; eine Sulfamidocarbonylgruppe der Formel VI

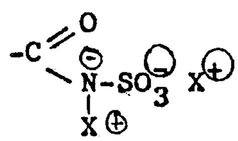

(VI)

worin X die oben angegebenen Bedeutungen hat, bedeuten oder worin $R^1$ Carboxyl oder dessen Alkali- oder Ammoniumsalz, $R^2$ Wasserstoff, $R^3$ eine Alkoxycarbonylgruppe der Formel VII

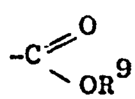

(VII)

in der $R^9$ einen Alkylrest mit 1-10, vorzugsweise 1-6 C-Atomen oder ein Rest der Formel VIII ist

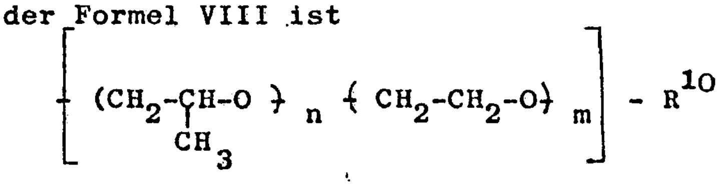

(VIII)

in welcher $R^{10}$ für Alkyl oder Alkenyl mit bis zu 20 C-Atomen, Phenyl, Naphthyl, Alkylphenyl, Alkylnaphthyl mit bis zu 12 C-Atomen in den Alkylgruppen, Phenoxyphenyl, Alkanoyl oder Alkenoyl mit 10-20 C-Atomen steht, n und m Zahlen von 0 bis 30 sind und die Summe von n + m eine Zahl von 1 bis 30 ist; oder eine Amidocarbonylgruppe der oben genannten Formel III bedeuten oder worin $R^2$ Wasserstoff und $R^1$ und $R^3$ zusammen eine Dicarbonimidfunktion der Formel IX

$$-\underset{\underset{O}{\|}}{C}-\underset{\underset{R^{11}}{|}}{N}-\underset{\underset{O}{\|}}{C}- \qquad (IX)$$

worin $R^{11}$ für Wasserstoff oder ggf. durch Hydroxy substituiertes Alkyl mit 1 - 4 C-Atomen steht, bedeuten, auf einen Polyvinylalkohol der Formel X

$$\left[ CH_2 - \underset{\underset{OY}{|}}{CH} \right]_p \qquad (X)$$

worin p eine Zahl von 400 - 5000 und Y im statistischen Mittel zu 100 - 85% Wasserstoff und zu 0 - 15% Alkanoyl mit 1 - 4 C-Atomen bedeutet, im Gewichtsverhältnis Vinylverbindung der Formel I zu Polyvinylalkohol der Formel X von 25 : 75 bis 2 : 98.

Für $R^3$ stehende Phenylreste können durch 1 bis 3 Alkyl oder Alkoxygruppen mit 1 bis 4 C-Atomen substituiert sein. Von diesen substituierten Phenylresten sind solche bevorzugt, die nur einen Substituenten enthalten und ferner solche bei denen die Alkyl oder Alkoxygruppen nur 1 bis 2 C-Atome aufweisen, insbesondere solche, bei denen die Substituenten Methyl- oder Methoxygruppen sind.

Für $R^4$ stehende Alkylgruppen können, wenn sie mindestens 2 C-Atome haben, durch eine β-ständige Hydroxygruppe, wenn sie 3 C-Atome haben, durch 1 bis 2 Hydroxygruppen, wenn sie 4 bis 6 C-Atome haben, durch bis zu 3 Hydroxygruppen, von denen keine in α-Stellung steht, substituiert sein.

Für $R^5$, $R^6$, $R^7$, $R^8$ und $R^{11}$ stehende Alkylgruppen können 1 bis 3 Hydroxygruppen tragen, maximal jedoch nur soviele wie sie C-Atome in der Kette aufweisen.

Bevorzugt sind von den durch Hydroxygruppen substituierten, für $R^4$, $R^5$, $R^6$, $R^8$ und $R^{11}$ stehenden Alkylresten solche, die nur eine oder maximal 2 Hydroxygruppen tragen, für $R^7$ solche mit nur einem OH-Substituenten.

In der Formel IV kann das aliphatische Brückenglied $-C_nH_{2n}-$, sofern $n > 3$ ist, linear oder verzweigt sein.

Bevorzugt sind dabei Brückenglieder mit 2 bis 4 C-Atomen wie beispielsweise Ethylen, Tri- oder Tetramethylen, 1- oder 2-Methylethylen, 1-, 2- oder 3-Methyl.trimethylen oder 1,2-, 1,1- oder 2,2-Dimethylethylen, Besonders bevorzugter Rest der Formel IV ist der Rest IVa

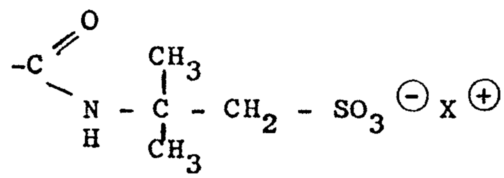

(IVa)

Sofern $R^5$ und $R^6$ gemeinsam eine gegebenenfalls durch $\geq NH$, Sauerstoff oder Schwefel unterbrochene 4 oder 5 gliedrige Polymethylenbrücke bilden, ist der Rest $-N<^{R^5}_{R^6}$ beispielsweise ein über das Stickstoffatom gebundener Pyrrolidin-, Pyrazolidin -, Diazolidin-, Oxazolidin-, Thiazolidin-, Piperidin-, Pyrimidin-, Pyridazin-, Morpholin- oder Thiomorpholinrest.

Bilden $R^7$ und $R^8$ gemeinsam eine 3 bis 6 gliedrige Polymethylenbrücke, so stellen die Reste der Formel V über das Stickstoffatom gebundene cyclische Amide dar. So ergibt sich beispielsweise für eine durch $R^7$ und $R^8$ gebildete 3-gliedrige Polymethylenbrücke für den Rest der Formel V ein Pyrrolidon-(1)-rest (Va) und für eine 5-gliedrige Polymethylenbrücke der Caprolactam-(1)-rest Vb.

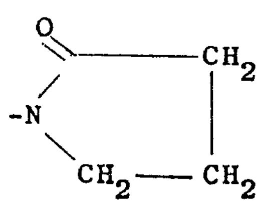

Va

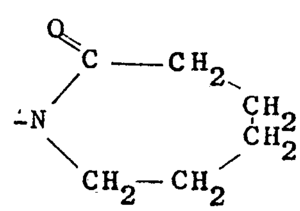

Vb

Bevorzugte Alkalisalze von Carboxyl-, Sulfo- und Phosphonsäuregruppen sind die Natriumsalze; desgleichen ist das bevorzugte, für $X^{\oplus}$ stehende Alkalikation das Natriumkation.

Polyvinylalkohole der Formel X sind die in der Technik so bezeichneten Produkte, die bei der Hydrolyse von Polyvinylestern, insbesondere von Polyvinylacetat erhalten werden. Der Hydrolysegrad dieser technischen Polyvinylalkohole liegt bei 85 bis über 99%, und es ist ohne weiteres möglich, auch praktisch vollständig hydrolysierte Polyvinylester, d.h. Polyvinylalkohole, die praktisch ausschließlich -OH Gruppen enthalten, herzustellen.

Die auf das Makromolekül des Polyvinylalkohols aufgepfropften Polymerisate sind, sofern sie ausschließlich aus gleichen Monomerenbausteinen aufgebaut sind, Homopolymerisate, sofern sie aus verschiedenen Monomerenbausteinen aufgebaut sind, Copolymerisate. Die aufgepfropften Copolymerisatketten können ihrerseits wieder im Rahmen der bekannten Polymerisationsgesetzmäßigkeiten statistisch aufgebaut sein, oder sie können den Charakter von Blockcopolymerisaten haben.

Eine detaillierte Beschreibung der Polymerisationsgesetzmäßigkeiten, die sowohl die verschiedenen Polymerisationsmethoden als auch den Aufbau der erhaltenen Polymeren umfaßt ist z.B. in Houben-Weyl, Methoden der organischen Chemie, 4. Auflage (1961), Bd. 14/1, Seiten 24-132, insbesondere Seiten 100-115, gegeben.

Besonders günstig verhalten sich Pfropfpolymerisate von Vinylverbindungen der Formel I

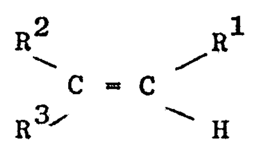

(I)

worin $R^1$ und $R^2$ Wasserstoff und $R^3$ Amidocarbonyl der Formel III; Alkanoylamino der Formel V; Alkanoyloxy mit 1-4, vorzugsweise 1-2, C-Atomen; gegebenenfalls durch Methyl oder Methoxy substituiertes Phenyl, eine Sulfonsäure- oder Phosphonsäuregruppe oder deren Alkali- oder Ammoniumsalz bedeuten oder worin $R^1$ Carboxyl oder dessen Alkali- oder Ammoniumsalz, $R^2$ Wasserstoff , $R^3$ eine Amidocarbonylgruppe der Formel III oder eine Alkoxycarbonylgruppe der Formel VII bedeuten, auf einen Polyvinylalkohol der Formel X enthalten.

Die vorliegende Erfindung betrifft somit ein Verfahren zum Aufhellen von synthetischen oder halbsynthetischen hochmolekularen organischen Materialien oder deren Mischungen mit natürlichen hochmolekularen organischen Materialien durch Behandeln der Materialien mit wässrigen Flotten, enthaltend bekannte in Wasser schwer lösliche oder unlösliche Aufhellerwirkstoffe und übliche Hilfsmittel wie ggf. Dispergier- bzw. Emulgiermittel, Carrier, Klotzhilfsmittel, Fungizide, Oxydantien nach dem Ausziehverfahren, den HT-Verfahren oder den Klotzdämpf- oder Klotz-Thermosolierverfahren, bei welchem die Flotte als Hilfsmittel ein oder mehrere der oben charakterisierten Pfropfpolymerisate von Vinylverbindungen der Formel I auf einen Polyvinylalkohol der Formel X enthält.

Synthetische hochmolekulare organische Materialien sind Polykondensationsverbindungen, wie z.B. die Polyester, insbesondere solche aus Terephthalsäure mit Ethylenglycol, Polyamide, wie z.B. Hexamethylendiamin-Adipinsäure Kondensationsprodukte, Polymerisationsverbindungen wie z.B. die Polymeren und Copolymeren von Acrylnitril. Unter halbsynthetischen hochmolekularen organischen Produkten versteht man natürliche Materialien, die durch versch. Prozesse abgewandelt wurden, wie z.B. durch Essigsäure teilweise veresterte Cellulose, beispielsweise das 2 1/2 Acetat oder Triacetat. Natürliche hochmolekulare organische Materialien sind z.B. Cellulosen, wie sie in vielen Baumwollqualitäten erhältlich sind.

Die aufzuhellenden organischen Materialien können als Rohstoff, Halbfertig- oder Fertigprodukt der Behandlung unterzogen werden. Bei textilen Anwendungen können die Polymermaterialien vorliegen z.B. als Fäden, Faservliese, Gewebe oder Gewirke.

Nach dem erfindungsgemäßen Verfahren können im Prinzip alle bekannten in Wasser schwerlöslichen oder unlöslichen optischen Aufhellerwirkstoffe auf die genannten Substrate appliziert werden.

Insbesondere seien die folgenden Klassen optischerAufheller genannt:
Bisbenzoxazolverbindungen, wie z.B. Naphthalin-1,4-bisbenzoxazol-(2) (vergl. DT PS 12 82 592),
Stilben-1,4-bisbenzoxazol-(2) (vergl. FR-PS 1397201),
Ethylen-1,2-bis-(5-methylbenzoxazol)-(2) (vergl. DT PS 1040535)
Thiophen-2,5-bisbenzoxazol-(2).
Benzoxazolstilbenverbindungen wie z.B. 4-Benzoxazol-2-yl-4' phenylstilben (vergl. DT AS 1 594 834),
4-Benzoxazol-2-yl-4'-[3-methyl-(1,2,4-oxadiazol)-5-yl]-stilben,
4-Benzoxazol-2-yl-4'-[2-methyl-(1,3,4-oxadiazol)-5-yl]-stilben (vergl. DT OS 27 09 924),
4-Benzoxazol-2-yl-4'-carbomethoxy-stilben und ω-(4,5-Dimethylbenzoxazol-2-yl)-4'cyan-styrol.
Naphthalimide wie z.B. 4-Methoxy-N-methylnaphthalimid und 4,5-Dimethoxy-N-methylnaphthalimid.
Bisethylenaryle wie z.B. 1,4-bis-(2-cyanstyryl-ω-)-benzol und 1,4-bis-(4-cyanstyryl-ω-)-benzol.
Pyrazoline wie z.B. 1-(4-Sulfamoylphenyl)-3-(-4-chlorphenyl)-pyrazolin,
1-[4-(β-Oxethylsulfonyl)-phenyl]-3-(4-chlorphenyl)-pyrazolin.
Cumarine wie z.B. 3-(4-Chlor-1,2-pyrazol-1-yl)-7-(4-phenyl-5-methyl-1,2,3-triazol-2-yl)-cumarin und 7-(4-Phenyl-5-methyl-1,2,3-triazol-2-yl)-cumarin.
Substituierte Pyrene wie z.B. 4,6-Dimethoxy-1,3,5-triazinylpyren (vergl. DT PS 12 73 479).
Benzofuranylstyrylverbindungen wie z.B. die aus der DT PS 21 05 305 bekannten.
Benzofuranyloxadiazolverbindungen wie z.B. die aus der DT OS 24 05 063 bekannten.

Selbstverständlich können auch Gemische zweier oder mehrerer optischer Aufheller eingesetzt werden. Nicht selten findet man dabei synergistische Effekte, d.h. der mit einer derartigen Mischung erreichbare Weißgrad liegt über der Summe der Weißgrade der einzelnen Mischungskomponenten.

Besonders wertvoll sind die erfindungsgemäßen Polymerverbindungen als Hilfs- und Dispergiermittel für die Applikation

von optischen Aufhellern aus der Reihe der Benzoxazolylstilbenverbindungen.

Von den verschiedenen bekannten Verfahren zur Applikation von wasserunlöslichen optischen Aufhellern auf synthetische oder halbsynthetische hochmolekulare organische Materialien kommen für den textilen Bereich, d.h. für das Aufhellen von Fasermaterialien, insbesondere das Klotz-Thermosol-Verfahren und die verschiedenen Ausziehverfahren, die bereits eingangs erwähnt worden sind, in Betracht. Den Klotz- bzw. Färbeflotten wird dabei in der Regel soviel Aufhellerwirkstoff zugesetzt, daß seine Gewichtsmenge, bezogen auf die Gewichtsmenge des geklotzten bzw. gefärbten Materials ca. 0,01 bis 1% beträgt. Entsprechend dieser Aufhellermenge enthalten die Klotz- bzw. Färbeflotten ca. 0,005 bis 0,9 Gew.%, bezogen auf das Gewicht des aufzuhellenden Materials, der erfindungsgemäß einzusetzenden Pfropfpolymeren.

Die sonstigen bekannten Flottenzusätze, wie z.B. Klotzhilfsmittel oder Schaumdämpfungsmittel werden durch die Anwesenheit der Pfropfpolymerisate nicht berührt und können in den üblichen Mengen in den Flotten enthalten sein.

Der Einsatz der genannten Pfropfpolymerisate führt zu einer wesentlichen Verstärkung des Aufhelleffekts insbesondere bei solchen Aufhellerwirkstoffen, die nach bekannten Verfahren nur schwierig und mit relativ geringer Weißausbeute zu applizieren waren.

Besonders vorteilhaft ist der erfindungsgemäße Einsatz der genannten Pfropfpolymerisate und die Durchführung des erfindungsgemäßen Aufhellungsverfahrens, wenn man wäßrige Zubereitungen herstellt, die bekannte, in Wasser schwer lösliche oder unlösliche Aufhellerwirkstoffe und ggf. neben den üblichen Hilfsmitteln wie z.B. Dispergier- bzw. Emulgiermittel, Carrier, Klotzhilfsmittel, Fungizide und Oxydantien, ein Pfropfpolymerisat von Vinylverbindungen der Formel I

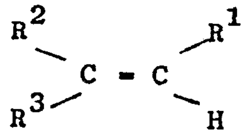 (I),

worin $R^1$, $R^2$ und $R^3$ die oben genannten Bedeutungen haben, auf einen Polyvinylalkohol der Formel X

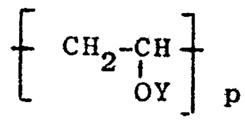 (X)

worin Y und p die oben genannten Bedeutungen haben, enthalten und diese Zubereitungen für die Herstellung der Färbe- bzw. Klotzflotten einsetzt.

Die erfindungsgemäßen Zubereitungen werden in an sich bekannter Weise erhalten, indem 4 bis 40 Gewichtsteile, vorzugsweise 5-10 Gewichtsteile eines oder mehrerer an sich bekannten, in Wasser unlöslichen oder schwer löslichen Aufhellerwirkstoffe in einem Lösungsmittel mit einem Mahlhilfsstoff auf eine mittlere Teilchengröße von 0,5 bis 2 µm zerkleinert werden, wobei vor, während oder nach der Mahlung 2 bis 30, vorzugsweise 4 bis 7 Gewichtsteile eines Pfropfpolymerisats des Anspruchs 1 sowie weitere übliche Hilfsmittel wie ggf. Dispergier- bzw. Emulgiermittel, Carrier, Klotzhilfsmittel, Fungizide, Oxydantien zugefügt werden und durch Wasserzusatz auf 100 Gewichtsteile ergänzt werden.

Besonders bevorzugte Zubereitungen werden erhalten wenn für 1 Gewichtsteil der Aufhellerwirksubstanz 0,5 bis 0,9 Gewichtsteile des Pfropfpolymerisats eingesetzt werden.

Das bei der Mahlung eingesetzte Lösungsmittel dient dazu, die anwesenden Hilfsstoffe zu lösen oder zu emulgieren. Es läßt dagegen den Aufheller ungelöst. Gleichzeitig dient es als flüssige Phase der hergestellten Zubereitung und soll daher mit Wasser vollständing oder zumindest begrenzt mischbar sein. Beispiele für solche Lösungsmittel sind die niederen Alkanole mit bis zu 4 C-Atomen. Bevorzugtes Lösungsmittel für den Mahlprozess ist Wasser. Die Mahlung kann in den verschiedensten Zerkleinerungsgeräten, wie z.B. Korundscheibenmühlen, Attritoren, Sandmühlen, Rührwerkskugelmühlen, Knetern, etc. erfolgen. Dabei wird die Aufhellerwirksubstanz mit einem Teil des

Dispergiermittels evtl. unter Zuhilfenahme eines Mahlhilfsmittelssolange in einem der vorgenannten Zerkleinerungsgeräte behandelt, bis die Aufhellerwirksubstanz die geforderte Feinverteilung erreicht hat.

Die erfindungsgemäßen einzusetzenden Pfropfpolymeren erniedrigen die Oberflächenspannung des Wassers sehr viel mehr als z.B. die Polyvinylalkohole. Dadurch benetzen sie das Mahlgut wesentlich besser als Polyvinylalkohol, so daß auf den separaten Zusatz eines Mahlhilfsmittels verzichtet werden kann. Man kann sogar sagen, daß die genannten Pfropfpolymeren nicht nur ausgezeichnete Dispergier- und Färbehilfsmittel, sondern auch gute Mahlhilfsmittel sind.

Aus diesem Grund ist es bei der Herstellung der erfindungsgemäßen Zubereitung auch möglich, als Mahlhilfsstoff beim Mahlen des Aufhellerwirkstoffs einen Bruchteil der Gesamtmenge des zuzusetzenden Pfropfpolymerisats einzusetzen und nach dem Mahlen den Rest des Pfropfpolymerisats zuzufügen.

Auch die anderen üblichen Zusätze wie z.B. Antischaummittel und Antifrostmittel werden vorzugsweise nach Erreichen der geforderten Feinverteilung zugegeben. Gegebenenfalls wird zum Schluß vom Mahlkörper (z.B. in Rührwerkskugelmühlen) abgetrennt.

Man erhält so Zubereitungen, die 4 - 40%, vorzugsweise 5 - 10%, mindestens eines in Wasser schwer bis unlöslichen optischen Aufhellers in feiner Verteilung, und 2 - 30%, vorzugsweise 4 - 7%, eines oder mehrerer der genannten Pfropfpolymereren und gegebenenfalls die oben genannten weiteren üblichen Zusätze enthalten.

Die erfindungsgemäße Dispersion ist hervorragend lagerstabil, d.h. die Feinverteilung bleibt innerhalb einer Zeit von drei Monaten bei einer Lagertemperatur von 50°C und + 5°C konstant, d.h. der Aufheller kristallisiert oder aggregiert nicht. Die Dispersion bleibt homogen und dünnflüssig. Selbstverständlich sind die färberischen Eigenschaften der erfindungsgemäßen Dispersion auch nach dieser Lagerzeit bei

$50^o$ ausgezeichnet und stehen einer frisch hergestellten Dispersion in nichts nach.

Daneben aber ist die Dispersion hervorragend färbestabil. Zur Prüfung auf Färbestabilität wird die Dispersion in Färbemaschinen auf Polyestermaterial ausgefärbt, wobei extrem hohe Scherkräfte auf die Dispersion ausgeübt werden. Als solche Färbegeräte sind zu nennen das Praxitestgerät der Firma ORIGINAL Hanau als spezielles Laboratoriumprüfgerät. Daneben haben sich kleinere Baumfärbe - oder Wickelkörperfärbeapparate zur Prüfung einer Dispersion auf Färbestabilität bestens bewährt.

Bei Verwendung der erfindungsgemäßen Aufhellerzubereitung zur Herstellung der Färbe- bzw. Klotzflotten ergeben sich dadurch praktische Vorteile, daß Aufhellerwirkstoff und erfindungsgemäß einzusetzendes Pfropfpolymerisat stets im optimalen Mengenverhältnis in die Flotte gelangen, Arbeitsgänge eingespart und die Reproduzierbarkeit der Aufhellung verbessert wird.

Eine Teilmenge der erfindungsgemäß einzusetzenden Pfropfpolymerisate ist neu. Es sind dies Pfropfpolymerisate einer Vinylverbindung der Formel I

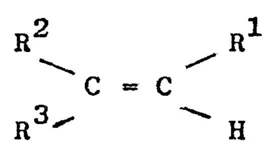

(I)

worin $R^1$ und $R^2$ Wasserstoff und $R^3$ eine Alkanoylaminogruppe der Formel V

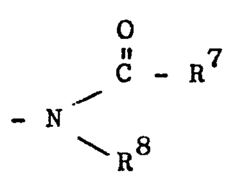

(V)

in der $R^7$ und $R^8$ unabhängig voneinander Wasserstoff oder gegebenenfalls durch Hydroxygruppen substituierte Alkylgruppen mit 1 - 4 C-Atomen bedeuten, worin aber auch $R^7$ und $R^8$ gemeinsam für eine 3-6 gliedrige, vorzugsweise eine 3-gliedrige Polymethylenbrücke stehen können, bedeutet, und gegebenenfalls

——— weiterer Vinylverbindungen der Formel I, worin $R^1$, $R^2$ und $R^3$ die in Anspruch 1 angegebenen Bedeutungen haben auf einen Polyvinylalkohol der Formel X

$$\left[ CH_2 - \underset{OY}{\underset{|}{CH}} \right]_p \qquad (X)$$

worin p eine Zahl von 400 - 5000 und Y im statistischen Mittel zu 100 - 85% Wasserstoff und zu 0 - 15% Alkanoyl mit 1 - 4 C-Atomen bedeutet, im Gewichtsverhältnis Vinylverbindung der Formel I zu Polyvinylalkohol der Formel X von 25 : 75 bis 2 : 98.

Die neuen Pfropfpolymerisate werden in an sich bekannter Weise dadurch erhalten, daß man zur Herstellung von 100 Gewichtsteilen des Pfropfpolymeren eine wäßrige Lösung enthaltend 75 bis 98 Gewichtsteile eines Polyvinylalkohols der Formel X

$$\left[ CH_2 - \underset{OY}{\underset{|}{CH}} \right]_n \qquad (X),$$

worin n eine Zahl von 400 bis 5000 und Y im statistischen Mittel zu 100 bis 85% Wasserstoff und zu 0 bis 15% Alkanoyl mit 1 bis 4 C-Atomen bedeutet, in Gegenwart eines Polymerisationsinitiators mit einer oder mehreren gelösten oder emulgierten Vinylverbindungen der Formel I

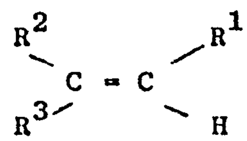

(I)

worin $R^1$ und $R^2$ Wasserstoff und $R^3$ eine Alkanoylaminogruppe der Formel V

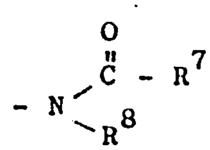

(V)

in der $R^7$ und $R^8$ unabhängig voneinander Wasserstoff oder ggf. durch Hydroxygruppen substituierte Alkylgruppen mit 1 - 4 C-Atomen sind, worin aber auch $R^7$ und $R^8$ gemeinsam für eine 3 - 6 gliedrige Polymethylenbrücke stehen können, bedeutet

und gegebenenfalls weiteren Vinylverbindungen der Formel I, worin $R^1$, $R^2$ und $R^3$ die im Anspruch 1 angegebenen Bedeutungen haben, wobei die Gesamtmenge der Vinylverbindungen der Formel I 25 bis 2 Gewichtsteile beträgt, bei Temperaturen von 40 bis 95$^o$C pfropfpolymerisiert.

Sofern Homopolymerisate aufgepfropft werden sollen setzt man nur eine Vinylverbindung der Formel I bei der Pfropfreaktion ein. Sollen Copolymerisate aufgepfropft werden so verwendet man mehrere, vorzugsweise 2 bis 4, verschiedene Vinylverbindungen der Formel I. Diese Vinylverbindungen können als Gemisch gleichzeitig aufgepfropft werden, so daß die aufgepfropften Copolymerisate im wesentlichen statistisch aufgebaut sind oder die verschiedenen Vinylverbindungen können nacheinander aufgepfropft werden, so daß die Bausteine der Copolymerisatketten blockartigen Aufbau haben.

Die folgenden Ausführungsbeispiele veranschaulichen das erfindungsgemäße Aufhellungsverfahren und den Einsatz und die Herstellung der erfindungsgemäßen Aufhellerzubereitungen. Auch die Herstellung neuer erfindungsgemäßer Pfropfpolymerisate wird darin veranschaulicht. Die Weißeffekte wurden mit einem Remissionsspektralphotometer Typ DMC-25 (Fa. Carl Zeiss, Oberkochen) gemessen. Die Auswertung der Messung erfolgte nach A. Berger ("Die Farbe", Bd 8 (1959) S. 187) und Stensby (S.C.S (1967), S. 41). Die Weißeffekte nach Berger wurden mit $W_B$, die nach Stensby mit $W_S$ abgekürzt. Alle Prozentangaben beziehen sich auf Gewicht, Teile sind Gewichtsteile.

Beispiel 1

a) Herstellung der Dispersion

7 Teile der Aufhellerwirksubstanz

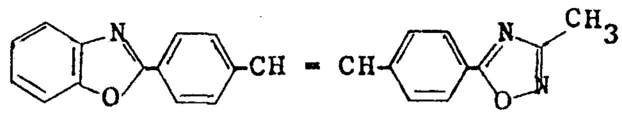

werden mit 8 Teilen entsalzten Wassers und 8 Teilen der 15%igen Lösung eines Pfropfpolymerisats, dessen Herstellung nachfolgend unter b) beschrieben wird, in einer Rührwerkskugelmühle mit Glasperlen von 1 mm Ø unter Wasserkühlung solange vermahlen, bis 80-90% aller Teilchen einen Durchmesser von 1-2 µm oder weniger aufweisen. Danach gibt man noch 25,3 Teile der 15%igen Lösung der Polymerverbindung und 51,7 Teile entsalzten Wassers zu, verrührt noch 30 min. und filtriert dann vom Mahlkörper ab. Man erhält eine Dispersion die ausgezeichnet lagerstabil ist. Selbst nach einer Lagerzeit von 12 Wochen bei 50°C ist die Dispersion noch homogen, dünnflüssig und leicht mit Wasser verdünnbar. Die Feinverteilung des Aufhellers ist noch einwandfrei, d.h. die Teilchen sind weder aggregiert noch rekristallisiert.

Auch die Färbestabilität dieser Dispersion ist einwandfrei, nach 6 Wochen Lagerung bei 50°C und im Kühlschrank färbt sie zu gleichen Weißeffekten aus.

b) Herstellung der Pfropfpolymerisatlösung

In einem 2 l. Polymerisationskolben, ausgerüstet mit Rührer, Thermometer, Rückflußkühler und einem Gaseinleitungsrohr werden 850 g Wasser vorgelegt und unter Rühren bei Raumtemperatur 135 g ® Mowiol 26/88 so eingetragen, daß eine Klumpenbildung vermieden wird. Es wird auf 60° C Innentemperatur aufgeheizt und gerührt, bis eine homogene Lösung entstanden ist. Es werden nun 15 g N-Vinyl-N-methylacetamid sowie 1 g ® Porofor N, gelöst in 5 g Dimethylformamid, zugefügt und 2 Stunden bei 60°C, sowie anschließend 2 Stunden bei 80°C nachgerührt. Während der gesamten Zeit wird ein schwacher Stickstoffstrom in die Reaktionslösung eingeleitet.

Man erhält eine viskose Polymerenlösung mit einem Feststoffgehalt von 15,0%.

Das hier eingesetzte® Mowiol 26/88 ist ein handelsüblicher Polyvinylalkohol mit einer Viskosität von etwa 26 m Pas und einem Verseifungsgrad von ca. 88%; das ® Porofor N ist ein Radikalinitiator auf Basis von Azo-isobutyronitril.

c) Ausfärbung

Aus der erfindungsgemäßen Dispersion werden durch Verdünnen mit Wasser Färbeflotten hergestellt, die 0.5 und 1.0 g Aufhellerwirksubstanz pro Liter Färbeflotte enthalten.
Zum Vergleich löst man 100 mg des obengenannten Aufhellers in der Wärme in 5 ml Dimethylformamid, versetzt dann mit 5 ml eines Emulgators (oxethyliertes Nonylphenol) und gießt die klare Lösung unter Rühren in eine Lösung von 8.5 ml des gleichen Emulgators in 76,5 ml Wasser. So erhält man eine Färbeflotte, die 1 g/l der Aufhellerwirksubstanz enthält.
Durch Verdünnen mit Wasser stellt man sich daneben noch eine Flotte her, die 0.5 g Aufhellerwirksubstanz pro Liter enthält.
Ein Gewebe aus Polyesterstapelfaser wurde in üblicher Weise vorgewaschen und bei 120°C getrocknet.
Das so vorbehandelte Gewebe wird in die obengenannten Färbeflotten eingetaucht und zwischen zwei Walzen auf eine Gewichtszunahme von 80% abgequetscht, danach bei 120°C getrocknet und dann einer Heißluftbehandlung von 30" 190°C unterworfen (Klotzthermosolverfahren = KT-Verf.)
Man erhält folgende Weißeffekte:

| Aufhellerkonzentration in der Klotzflotte | 0,5 g/l | 1,0 g/l |
|---|---|---|
| | $W_B/W_S$ | $W_B/W_S$ |
| Vergleich | 163/162 | 168/165 |
| erfindungsgemäße Dispersion | 165/163 | 170/167 |

HT-Verfahren:

Ein wie üblich vorgewaschenes und getrocknetes Gewebe von Polyesterstapelfaser wurde in einem Färbeapparat während 45" bei 120°C mit Färbeflotten behandelt,

die 0,04% bzw. 0,08% Aufheller bezogen auf das Warengewicht enthält. Nach dem Spülen und Trocknen wurden folgende Weißeffekte gemessen:

| Aufhellerkonzentration bezogen auf Warengewicht | 0,04% | 0,08% |
|---|---|---|
| | $W_B/W_S$ | $W_B/W_S$ |
| Vergleich | 163/160 | 169/164 |
| erfindungsgem. Dispersion | 164/160 | 169/164 |

Ähnlich gute Ergebnisse erhält man mit folgenden Pfropfpolymerisatlösungen, die gleichfalls in der oben beschriebenen Methode hergestellt wurden:

| Beispiel | 1.1 | 1.2 | 1.3 | 1.4 |
|---|---|---|---|---|
| Ausgangsmaterial | [g] | [g] | [g] | [g] |
| Wasser | 600 | 850 | 850 | 850 |
| ® MOWIOL 26/88 | 160 | 127,5 | 142,5 | 146,5 |
| Vinylmethylacetamid | 40 | 22,5 | 7,5 | 4,5 |
| ® POROFOR N | 1 | 1 | 1 | 1 |
| Dimethylformamid | 5 | 5 | 5 | 5 |

Beispiel 2

Unter Verwendung der folgenden Aufhellerwirksubstanz

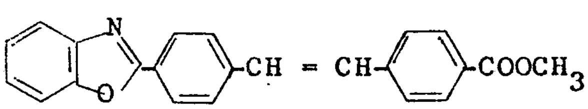

stellt man sich, wie in Beispiel 1 angegeben, eine Dispersion her, die 7% Aufheller und 5% der in Beispiel 1 genannten Polymerverbindung enthält.

Zum Vergleich stellt man sich eine Dispersion her, die ebenfalls 7% Aufheller, aber als Dispergier- und Hilfsmittel 4% eines teilverseiften Polyvinylalkohols enthält. Die Ausfärbung auf PES-Stapel-Faser erbrachte folgende Weißeffekte:

| Aufhellerkonzentration in der Klotzflotte | 1,0 g/l | 1,5 g/l |
|---|---|---|
| | $W_B/W_S$ | $W_B/W_S$ |
| Polyvinylalkohol | 147/149 | 148/150 |
| erfindungsgemäße Dispersion | 150/150 | 152/152 |

Beispiel 3

a) Herstellung der Dispersion

7 Teile der Aufhellerwirksubstanz aus Beispiel 1, 20 Teile entsalztes Wasser und 15 Teile der 15%igen Lösung eines Pfropfpolymerisats, dessen Herstellung nachstehend unter b) beschrieben ist, werden in einer Rührwerkskugelmühle mit Glasperlen von 1 mm Ø solange vermahlen, bis 80-90% aller Teilchen eine maximale Ausdehnung von 1-2 µm aufweisen. Man gibt dann noch 18,3 Teile der 15%igen Lösung der Pfropfpolymerisats und 39,7 Teile entsalztes Wasser zu, verrührt noch ca. 30 min. und siebt dann von den Glasperlen ab. Man erhält eine Dispersion, deren Lager- und Färbestabilität ausgezeichnet ist.

b) Herstellung der Pfropfpolymerisatlösung

In einem 2 l Polymerisationskolben, ausgerüstet mit Rührer, Thermometer, Rückflüßkühler und einem Gaseinleitungsrohr werden 850 g Wasser vorgelegt und unter Rühren bei Raumtemperatur 135 g ® MOWIOL 26/88 so eingetragen, daß Klumpenbildung vermieden wird. Es wird auf 60°C Innentemperatur aufgeheizt und gerührt, bis eine homogene Lösung entstanden ist. Dann werden 15 g N-Vinylpyrrolidon sowie 1 g ® POROFOR N, gelöst in 5 g Dimethylformamid, zugefügt und 2 Stunden bei 60°C sowie anschließend 2 Stunden bei 80°C nachgerührt. Während der gesamten Zeit wird ein schwacher Stickstoffstrom in die Reaktionslösung eingeleitet.

Man erhält eine viskose Polymerenlösung mit einem Feststoffgehalt von 15,0%.

c) Ausfärbung:

Färbt man nach dem Klotz-Thermosolverfahren wie in Beispiel 1 angegeben auf PES-Stapelfaser, so erzielt man folgende Weißeffekte:

| Aufhellerkonzentration in der Klotzflotte | 0,5 g/l | 1,0 g/l |
|---|---|---|
| | $W_B/W_S$ | $W_B/W_S$ |
| Vergleich | 163/162 | 168/165 |
| erfindungsgemäße Dispersion | 167/164 | 170/166 |

Ähnlich gute Ergebnisse erhält man mit folgenden Pfropfpolymerisatlösungen, die analog oben beschriebenen Methode hergestellt werden:

| Beispiel | 3.1 | 3.2 | 3.3 |
|---|---|---|---|
| Ausgangsmaterial | [g] | [g] | [g] |
| Wasser | 600 | 850 | 850 |
| ® MOWIOL 26/88 | 135 | 135 | 135 |
| ® POROFOR N | 1 | 1 | 1 |
| Dimethylformamid | 5 | 5 | 5 |
| Acrylamid | 20 | | |
| Vinylformamid | | 15 | |
| Vinylacetamid | | | 15 |

Beispiel 4

a) Herstellung der Dispersion

7 Teile der Aufhellerwirksubstanz aus Beispiel 1, 15 Teile destilliertes Wasser und 7 Teile der 15%igen Lösung einer Polymerverbindung deren Herstellung nachfolgend unter b) beschrieben wird, werden in einer Rührwerkskugelmühle mit Glasperlen von 1 mm Ø solange vermahlen, bis die gewünschte Feinverteilung erreicht ist. Dann gibt man noch 26.3 Teile der 15%igen Lösung der Polymerverbindung und 44,7 Teile destilliertes Wasser zu , verrührt noch 10 Minuten und siebt dann von den Glasperlen ab.

b) Herstellung der Polymerverbindung

In einem 2 l Polymerisationskolben, ausgerüstet mit Rührer, Thermometer, Rückflüßkühler und einem Gaseinleitungsrohr werden 850 g Wasser vorgelegt und unter Rühren bei Raumtemperatur 135 g ® MOWIOL 26/88 so eingetragen, daß Klumpenbildung vermieden wird. Es wird auf 60°C Innentemperatur aufgeheizt und gerührt, bis eine homogene Lösung entstanden ist. Dann werden 15 g Vinylacetat sowie 1 g ® POROFOR N, gelöst in 5 g Dimethylformamid, zugefügt und 2 Stunden bei 60°C sowie anschließend 2 Stunden bei 80°C nachgerührt. Während der gesamten Zeit wird ein schwacher Stickstoffstrom in die Reaktionslösung eingeleitet. Man erhält eine viskose Polymerenlösung mit einem Feststoffgehalt von 15,0%.

c) Ausfärbung

Färbt man nach den Klotz-Thermosolverfahren wie in Beispiel 1 angegeben auf PES-Stapelfaser, so erhält man folgende Weißeffekte

| Aufhellerkonzentration in der Klotzflotte | KT 30" 190°C 0,5 g/l | 1,0 g/l |
|---|---|---|
| | $W_B/W_S$ | $W_B/W_S$ |
| Vergleich | 160/159 | 164/162 |
| erfindungsgemäße Dispersion | 164/162 | 168/165 |

Nach dem ebenfalls in Beispiel 1 beschriebenen HT-Ausziehverfahren 45 Minuten bei 120°C gefärbt ergeben sich folgende Weißeffekte:

| Aufhellermenge bezogen auf Warengewicht | 0,08% |
|---|---|
| | $W_B/W_S$ |
| Vergleich | 164/160 |
| erfindungsgemäße Dispersion | 166/161 |

Ähnlich gute Ergebnisse erhält man mit folgenden Pfropfpolymerisatlösungen, die analog der obigen Herstellungsvorschrift erhalten werden können:

| Beispiel | 4.1 | 4.2 | 4.3 | 4.4 | 4.5 | 4.6 |
|---|---|---|---|---|---|---|
| Ausgangsmaterial | /g/ | /g/ | /g/ | /g/ | /g/ | /g/ |
| Wasser | 850 | 850 | 850 | 850 | 850 | 850 |
| R MOWIOL 26/28 | 135 | 135 | 135 | 135 | 135 | 142,5 |
| R POROFOR N | 1 | 1 | 1 | 1 | 1 | 1 |
| Dimethylformamid | 5 | 5 | 5 | 5 | 5 | 5 |
| Halbester der Maleinsäure mit ... | | | | | | |
| ... $C_9/C_{11}$ Oxoalkohol + 7 EO | 15 | | | | | |
| ... o-Phenylphenol | | 15 | | | | |
| ... Oleylalkohol + 23 EO | | | 15 | | | |
| ... Nonylphenol + 23 EO | | | | 15 | | |
| Acrylnitril | | | | | 15 | |
| Styrol | | | | | | 7,5 |

Beispiel 5

a) Herstellung der Dispersion

Durch Mahlung in einer Rührwerkskugelmühle, ähnlich wie in Beispiel 1 beschrieben, stellt man sich eine Dispersion her, die 7% Aufhellerwirksubstanz der folgenden Formel

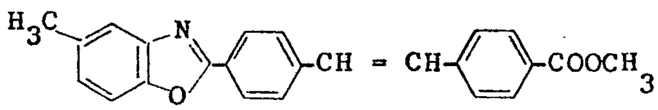

und 5% eines Pfropfpolymerisats, deren Herstellung nachstehend unter b) beschrieben wird, enthält.

b) Herstellung der Polymerverbindung

In einem 2 l Polymerisationskolben, ausgerüstet mit Rührer, Thermometer, Rückflüßkühler und einem Gaseinleitungsrohr werden 600 g Wasser vorgelegt und unter Rühren bei Raumtemperatur 180 g ® MOWIOL 26/88 so eingetragen, daß Klumpenbildung vermieden wird. Es wird auf 60°C Innentemperatur aufgeheizt und gerührt, bis eine homogene Lösung entstanden ist. Es werden nun 20 g Natrium-Vinylsulfonat sowie 1 g ® POROFOR N , gelöst in 5 g Dimethylformamid, zugefügt und 2 Stunden bei 60°C sowie anschließend 2 Stunden bei 80°C nachgerührt. Während der gesamten Zeit wird ein schwacher Stickstoffstrom in die Reaktionslösung eingeleitet. Man erhält eine viskose Polymerenlösung mit einem Feststoffgehalt von 15,0%.

c) Ausfärbung

Die Ausfärbung nach dem Klotz-Thermosolverfahren auf PES-Stapelfasergewebe ergab folgende Weißeffekte

| Aufhellerkonzentration in der Klotzflotte | 0,5 g/l | 1,0 g/l | 1,5 g/l |
|---|---|---|---|
| | $W_B/W_S$ | $W_B/W_S$ | $W_B/W_S$ |
| Vergleich | 153/154 | 161/161 | 163/163 |
| erfindungsgemäße Dispersion | 159/159 | 164/162 | 165/163 |

Ähnlich gute Ergebnisse erzielt man wenn man ein Pfropfpolymerisat einsetzt, das man durch Aufpropfen von 20 g Vinylphosphonsäure auf 180 g ® MOWIOL 26/28 in der oben beschriebenen Weise erhält.

Beispiel 6

a) Herstellung der Dispersion

Wie in Beispiel 1 angegeben stellt man sich Dispersionen her, die 7% der in Beispiel 1 angegebenen Aufhellerwirksubstanz und je 5% der nachfolgend beschriebenen Polymerverbindungen enthalten.

b) Herstellung der Polymerverbindungen

$b_1$) In einem 2 l Polymerisationskolben, ausgerüstet mit Rührer, Thermometer, Rückflüßkühler und einem Gaseinleitungsrohr werden 830 g Wasser und 30 g Natriumvinylsulfonat als 25%ige Lösung vorgelegt und unter Rühren bei Raumtemperatur 135 g MOWIOL 26/28 so eingetragen, daß Klumpenbildung vermieden wird. Es wird auf 60°C Innentemperatur aufgeheizt und gerührt, bis eine homogene Lösung entstanden ist. Dann wird 1 g POROFOR N, gelöst in 5 g Dimethylformamid zugefügt und 2 Stunden bei 60°C sowie anschließend 1 Stunde bei 80°C nachgerührt. Während der gesamten Zeit wird ein schwacher Stickstoffstrom in die Reaktionslösung eingeleitet. Danach werden 7,5 g N-Vinylmethylacetamid und nochmals 0,2 g POROFOR N gelöst in 1 g Dimethylformamid zugegeben und weitere 2 Stunden bei 80°C gerührt.
Man erhält eine viskose Polymerenlösung mit einem Feststoffgehalt von 15,0%.

$b_2$) In einem 2 l Polymerisationskolben, ausgerüstet mit Rührer, Thermometer, Rückflüßkühler und einem Gaseinleitungsrohr werden 830 g Wasser vorgelegt und unter Rühren bei Raumtemperatur 135 g MOWIOL 26/88 so eingetragen, daß Klumpenbildung vermieden wird, auf 60 °C Innentemperatur aufgeheizt und gerührt, bis eine homogene Lösung entstanden ist. Es werden nun 7,5 g N-Vinyl-N-methylacetamid sowie 1 g POROFOR N gelöst in 5 g Dimethylformamid zugefügt und 2 Stunden bei 60°C sowie anschließend 1 Std. bei 80°C nachgerührt. Während der gesamten Zeit wird ein schwacher Stickstoffstrom in die Reaktionslösung eingeleitet. Danach werden 30 g Natriumvinylsulfonat als 25%ige Lösung sowie 0,2 g POROFOR N, gelöst in 1 g Dimethylformamid zugegeben und weitere 2 Stunden bei 80°C gerührt.
Man erhält eine viskose Polymerenlösung mit einem Feststoffgehalt von 15,0%.

$b_3$) Man polymerisiert MOWIOL, Natriumvinylsulfonat und Vinylmethylacetamid gleichzeitig wie folgt:

In der in Beispiel 1 beschriebenen Apparatur und nach der in Beispiel 1 beschriebenen Methode wird eine Pfropfpolymerisatlösung hergestellt aus 830 g Wasser, 135 g MOWIOL 26/88, 30 g Na-Vinylsulfonat als 25%ige Lösung, 7,5 g N-Vinyl-N-methylacetamid, 1 g POROFOR N, 5 g Dimethylformamid.

c) Ausfärbung

Die Ausfärbung nach dem Klotz-Thermosolverfahren mit Fixierung 30 Sec. bei 190°C (KT 30" 190°C) und nach dem HT-Ausziehverfahren 45' bei 120°C (HT 45' 120°) auf PES-Stapelfaser ergab folgende Weißeffekte:

| | | KT 30" 190°C | | HT 45' 120°C |
|---|---|---|---|---|
| Aufhellerkonz. in der Klotzflotte [g/l] bzw. Aufhellermenge bezogen auf Warengewicht [%] | | 0,5 g/l | 1,0 g/l | 0,08% |
| | | $W_B/W_S$ | $W_B/W_S$ | $W_B/W_S$ |
| Vergleich | | 163/162 | 168/165 | 167/163 |
| erfindungsgemäße Dispersionen | $b_1)$ | 166/164 | 169/165 | 168/162 |
| | $b_2)$ | 166/164 | 170/166 | 168/164 |
| | $b_3)$ | 167/164 | 168/163 | 166/160 |

Man erkennt, daß das Polymer $b_2$) deutlich bessere Weißeffekte entwickelt als die beiden anderen.

Beispiel 7

a) Herstellung der Dispersion

6,5 Teile der Aufhellerwirksubstanz

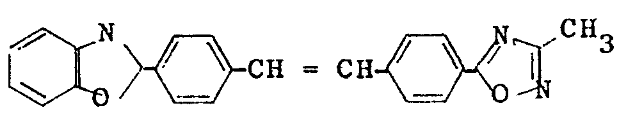

und 0,5 Teile der folgenden Aufhellerwirksubstanz

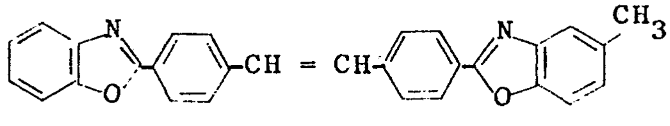

werden mit 7 Teilen der 15%igen Lösung des Pfropfpolymerisats aus Beispiel 1 und 15 Teilen destillierten Wassers in einer Rührverkskugelmühle mit Glasperlen von 1 mm Ø solange unter Wasserkühlung vermahlen, bis die geforderte Feinverteilung erreicht ist. Danach gibt man noch 26,3 Teile der Lösung der Polymerverbindung und 44,7 Teile destillierten Wassers zu, verrührt noch kurz und siebt dann von den Glasperlen ab.

b) Ausfärbung

**Die Ausfärbung nach dem Klotz-Thermosolprozess mit Fixierung 30 Sec. bei 180° C auf PES Stapelfaser ergab folgende Weißeffekte:**

| Aufhellerkonzentration in der Klotzfoltte | 0.5 g/l | 1,0 g/l |
|---|---|---|
| | $W_B/W_S$ | $W_B/W_S$ |
| Vergleich | 162/160 | 169/164 |
| erfindungsgemäße Dispersion | 166/162 | 171/165 |

Beispiel 8

Durch Mahlung in einer Rührwerkskugelmühle, ähnlich wie in Beispiel 1 angegeben, stellt man sich eine Dispersion her, die 7% der folgenden Aufhellerwirksubstanz

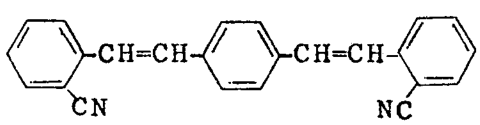

und 5% des in Beispiel 1 angegebenen Pfropfpolymerisats enthält.

Die Ausfärbung auf PES-Stapelfasergewebe erfolgte nach dem Klotz-Thermosolprozess mit Fixierung 30 Sec. bei 190° C und nach dem HT-Ausziehverfahren 45 Min. bei 120° C im Vergleich mit 2 verschiedenen Handelsdispersionen und ergab folgendes Bild:

| Aufheller konz. in der Klotzflotte, bzw. Aufhellermenge bezogen auf Warengewicht | KT 30" 190°C | | HT 45' 120°C | |
|---|---|---|---|---|
| | 0,5 g/l | 1,0 g/l | 0,05 % | 0,1 % |
| | $W_B/W_S$ | $W_B/W_S$ | $W_B/W_S$ | $W_B/W_S$ |
| Handelsdispersion 1 | 167/163 | 170/163 | 168/162 | 168/160 |
| Handelsdispersion 2 | 170/165 | 174/167 | 169/162 | 170/162 |
| erfindungsgemäße Dispersion | 172/166 | 176/169 | 173/166 | 174/165 |

Beispiel 9

Wie in Beispiel 1 angegeben, wird aus einer Mischung von 86 Teilen der Aufhellerwirksubstanz

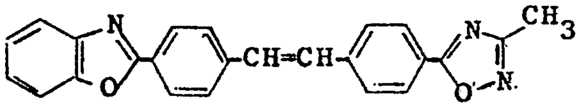

und 14 Teilen der Aufhellerwirksubstanz

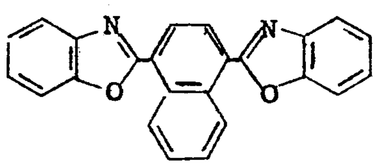

eine Dispersion hergestellt, die 7% Aufhellergemisch und 5% der in Beispiel 1 angegebenen Polymerverbindung enthält.

Die Ausfärbung auf PES-Stapelfasergewebe nach dem Klotz-Thermosolprozess erbrachte folgende Weißeffekte

| Aufhellerkonzentration in der Klotzflotte | 0,5 g/l | 1,0 g/l |
|---|---|---|
| | $W_B/W_S$ | $W_B/W_S$ |
| Vergleich | 166/163 | 171/164 |
| erfindungsgemäße Dispersion | 169/164 | 173/167 |

Die entsprechende Ausfärbung auf Polyester- Baumwolle-Gemisch 65 : 35 ergab folgende Weißeffekte:

| Aufhellerkonzentration in der Klotzflotte | 0,34 g/l | 0,67 g/l |
|---|---|---|
| | $W_B/W_S$ | $W_B/W_S$ |
| Vergleich | 144/141 | 151/147 |
| erfindungsgemäße Dispersion | 148/147 | 152/149 |

P a t e n t a n s p r ü c h e

1. Wäßrige Zubereitungen optischer Aufheller enthaltend bekannte in Wasser schwer lösliche oder unlösliche Aufhellerwirkstoffe und übliche Hilfsmittel wie ggf. Dispergier- bzw. Emulgiermittel, Carrier, Klotzhilfsmittel, Fungizide, Oxydantien, dadurch gekennzeichnet, daß sie als Hilfsmittel ein Pfropfpolymerisat von Vinylverbindungen der Formel I

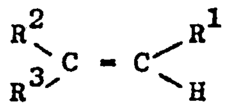

(I)

worin $R^1$ und $R^2$ Wasserstoff und $R^3$ eine Alkanoyloxygruppe mit 1-4 C-Atomen; eine Cyangruppe; gegebenenfalls durch Alkyl mit 1-4 C-Atomen oder Alkoxy mit 1-4 C-Atomen substituiertes Phenyl; Carboxyl oder deren Alkali oder Ammoniumsalz; eine Alkoxycarbonylgruppe der Formel II

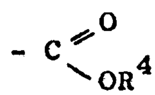

(II)

worin $R^4$ eine gegebenenfalls durch Hydroxygruppen substituierte Alkylgruppe mit 1-6 C-Atomen ist; eine Amidocarbonylgruppe der Formel III

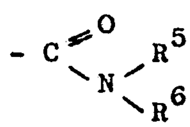

(III)

worin $R^5$ und $R^6$ voneinander unabhängig Wasserstoff oder ggf. durch Hydroxygruppen substituierte Alkylgruppen mit 1-4 C-Atomen sind, worin aber auch $R^5$ und $R^6$ gemeinsam eine ggf. durch >NH, Sauerstoff oder Schwefel unterbrochene 4 oder 5 gliedrige Polymethylenbrücke bilden können; eine Sulfoalkyl-amidocarbonylgruppe der Formel IV

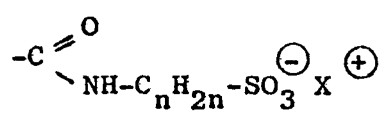

(IV)

worin n eine Zahl von 1 bis 6 und X ein Alkalimetall oder Ammonium ist; eine Alkanoylaminogruppe der Formel V

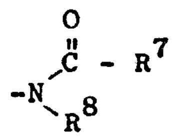 (V)

in der $R^7$ und $R^8$ unabhängig voneinander Wasserstoff oder gegebenenfalls durch Hydroxygruppen substituierte Alkylgruppen mit 1-4 C-Atomen bedeuten, worin aber auch $R^7$ und $R^8$ gemeinsam für eine 3-6 gliedrige Polymethylenbrücke stehen können, eine Sulfonsäuregruppe oder eine Phosphonsäuregruppe oder deren Alkali- oder Ammoniumsalz bedeuten oder worin $R^1$ Wasserstoff; $R^2$ Alkyl mit 1 - 4 C-Atomen; $R^3$ Carboxyl oder dessen Alkali- oder Ammoniumsalz; Alkoxycarbonyl der oben angegebenen Formel II; eine Amidocarbonylgruppe der oben angegebenen Formel III; eine Sulfamidocarbonylgruppe der Formel VI

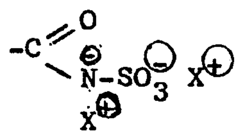 (VI)

worin X die oben angegebenen Bedeutungen hat, bedeuten oder worin $R^1$ Carboxyl oder dessen Alkali- oder Ammoniumsalz, $R^2$ Wasserstoff, $R^3$ eine Alkoxycarbonylgruppe der Formel VII

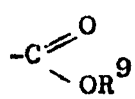 (VII)

in der $R^9$ einen Alkylrest mit 1-10 C-Atomen oder ein Rest der Formel VIII ist

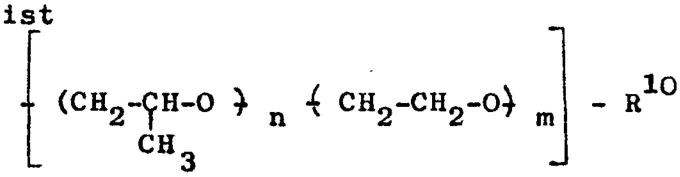 (VIII)

in welcher $R^{10}$ für Alkyl oder Alkenyl mit bis zu 20 C-Atomen, Phenyl, Naphthyl, Alkylphenyl, Alkylnaphthyl mit bis zu 12 C-Atomen in den Alkylgruppen, Phenoxyphenyl, Alkanoyl oder Alkenoyl mit 10-20 C-Atomen steht, n und m Zahlen von 0 bis 30 sind und die Summe von n + m eine Zahl von 1 bis 30 ist; oder eine Amidocarbonylgruppe der oben genannten Formel III bedeuten oder worin $R^2$ Wasserstoff und $R^1$ und $R^3$ zusammen eine Dicarbonimidfunktion der Formel IX

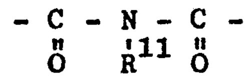 (IX)

worin $R^{11}$ für Wasserstoff oder ggf. durch Hydroxy substituiertes Alkyl mit 1 - 4 C-Atomen steht, bedeuten, auf einen Polyvinylalkohol der Formel X

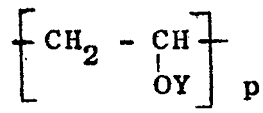 (X)

worin p eine Zahl von 400 - 5000 und Y im statistischen Mittel zu 100 - 85% Wasserstoff und zu 0 - 15% Alkanoyl mit 1 - 4 C-Atomen bedeutet, im Gewichtsverhältnis Vinylverbindung der Formel I zu Polyvinylalkohol der Formel X von 25 : 75 bis 2 : 98, enthalten.

2. Wäßrige Zubereitungen optischer Aufheller gemäß Anspruch 1 dadurch gekennzeichnet, daß sie ein Pfropfpolymerisat von Vinylverbindungen der Formel I

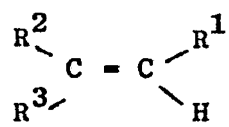 (I)

worin $R^1$ und $R^2$ Wasserstoff und $R^3$ Amidocarbonyl der Formel III; Alkanoylamino der Formel V; Alkanoyloxy mit 1 - 4 C-Atomen; gegebenenfalls durch Methyl oder Methoxy substituiertes Phenyl, eine Sulfonsäure- oder Phosphonsäuregruppe oder deren Alkali- oder Ammoniumsalz bedeuten oder worin $R^1$ Carboxyl oder dessen Alkali- oder Ammoniumsalz, $R^2$ Wasserstoff, $R^3$ eine Amidocarbonylgruppe der Formel III oder eine Alkoxycarbonylgruppe der Formel VII bedeuten, auf einen Polyvinylalkohol der Formel X enthalten.

3. Wäßrige Zubereitungen optischer Aufheller gemäß den Ansprüchen 1 und 2, dadurch gekennzeichnet, daß sie auf 1 Gewichtsteil Aufhellerwirksubstanz 0,5 - 0,9 Gewichsteile des Pfropfpolymerisats enthalten.

4. Pfropfpolymerisate einer Vinylverbindung der Formel I

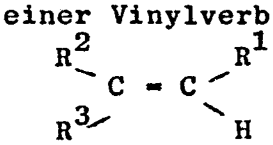 (I)

worin $R^1$ und $R^2$ Wasserstoff und $R^3$ eine Alkanoylaminogruppe der Formel V

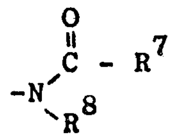 (V)

in der $R^7$ und $R^8$ unabhängig voneinander Wasserstoff oder ggf. durch Hydroxygruppen substituierte Alkylgruppen mit 1 - 4 C-Atomen sind, worin aber auch $R^7$ und $R^8$ gemeinsam für eine 3 - 6 gliedrige Polymethylenbrücke stehen können, bedeuten, und ggf. weiterer Vinylverbindungen der Formel I, worin $R^1$, $R^2$ und $R^3$ die in Anspruch 1 angegebenen Bedeutungen haben auf einen Polyvinylalkohol der Formel X

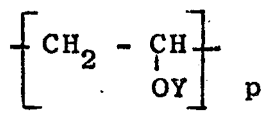 (X)

worin p eine Zahl von 400 - 5000 und Y im statistischen Mittel zu 100 - 85% Wasserstoff und zu 0 - 15% Alkanoyl mit 1 - 4 C-Atomen bedeutet, im Gewichtsverhältnis Vinylverbindung der Formel I zu Polyvinylalkohol der Formel X von 25 : 75 bis 2 : 98.

5. Verfahren zur Herstellung wäßriger Zubereitungen optischer Aufheller des Anspruchs 1, dadurch gekennzeichnet, daß 4 bis 40 Gewichtsteile eines an sich bekannten in Wasser unlöslichen oder schwer löslichen Aufhellerwirkstoffs in Wasser mit einem Mahlhilfsstoff auf eine mittlere Teilchengröße von 0,5 bis 2 /um zerkleinert wird, vor, während oder nach dem Mahlen 2 bis 30 Gewichtsteile eines Pfropfpolymerisats des Anspruchs 1 sowie weitere übliche Hilfsmittel wie ggf. Dispergier- bzw. Emulgiermittel, Carrier, Klotzhilfsmittel, Fungizide, Oxydantien, zugefügt werden und durch Wasserzusatz auf 100 Gewichsteile ergänzt wird.

6. Verfahren nach Anspruch 5, dadurch gekennzeichnet, daß als Mahlhilfsstoff beim Mahlen des Aufhellerwirkstoffs ein Bruchteil der Gesamtmenge des zuzusetzenden Pfropfpolymerisats eingesetzt wird und nach dem Mahlen der Rest des Pfropfpolymerisats zugefügt wird.

7. Verfahren zur Herstellung von Pfropfpolymerisaten des Anspruchs 4 einer Vinylverbindung der Formel I auf einen Polyvinylalkohol der Formel X, dadurch gekennzeichnet, daß man zur Herstellung von 100 Gewichtsteilen des Pfropfpolymeren eine wäßrige Lösung, enthaltend 75 bis 98 Gewichtsteile eines Polyvinylalkohols der Formel X

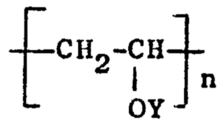 (X),

worin n eine Zahl von 400 bis 5000 und Y im statistischen Mittel zu 100 bis 85% Wasserstoff und zu 0 bis 15% Alkanoyl mit 1 bis 4 C-Atomen bedeutet, in Gegenwart eines Polymerisationsinitiators mit einer oder mehreren gelösten oder emulgierten Vinylverbindungen der Formel I

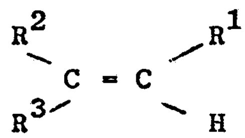 (I)

worin $R^1$ und $R^2$ Wasserstoff und $R^3$ eine Alkanoylaminogruppe der Formel V

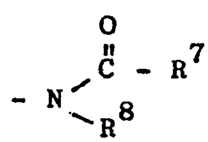 (V)

in der $R^7$ und $R^8$ unabhängig voneinander Wasserstoff oder ggf. durch Hydroxygruppen substituierte Alkylgruppen mit 1 - 4 C-Atomen sind, worin aber auch $R^7$ und $R^8$ gemeinsam für eine 3 - 6 gliedrige Polymethylenbrücke stehen können, bedeuten und ggf. weiteren Vinylverbindungen der Formel I, worin $R^1$, $R^2$ und $R^3$ die im Anspruch 1 angegebenen Bedeutungen haben, wobei die Gesamtmenge der Vinylverbindungen der Formel I 25 bis 2 Gewichtsteile beträgt, bei Temperaturen von 40 bis 95°C pfropfpolymerisiert.

8. Verfahren nach Anspruch 7, dadurch gekennzeichnet, daß 2 bis 4 Vinylverbindungen der Formel I als Gemisch gleichzeitig pfropfpolymerisiert werden.

9. Verfahren nach Anspruch 7, dadurch gekennzeichnet, daß 2 bis 4 Vinylverbindungen der Formel I nacheinander pfropfpolymerisiert werden.

10. Verfahren zum Aufhellen von synthetischen oder halbsynthetischen hochmolekularen organischen Materialien oder deren Mischungen mit natürlichen hochmolekularen organischen Materialien durch Behandeln der Materialien mit wäßrigen Flotten enthaltend bekannte in Wasser schwer lösliche oder unlösliche Aufhellerwirkstoffe und übliche Hilfsmittel wie ggf. Dispergier- bzw. Emulgiermittel, Carrier, Klotzhilfsmittel, Fungizide, Oxydantien nach dem Ausziehverfahren, dem HT-Verfahren oder dem Klotzdämpf- oder Klotz-Thermosolierverfahren, dadurch gekennzeichnet, daß die Flotte als Hilfsmittel ein Pfropfpolymerisat des Anspruchs 1 von Vinylverbindungen der Formel I auf einen Polyvinylalkohol der Formel X enthält.

0044995

Europäisches Patentamt

# EUROPÄISCHER RECHERCHENBERICHT

Nummer der Anmeldung

EP 81 10 5456

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | FR - A - 1 573 505 (HOECHST)<br>* Zusammenfassung 2°a *<br>& DE - A - 1 720 683<br>-- | 1 | D 06 L 3/12<br>C 08 F 261/04 |
| | DE - B - 1 214 404 (HOECHST)<br>* Anspruch 1; Spalte 1, Zeilen 35-49 *<br>-- | 1,4 | |
| | CH - A - 550 277 (BAYER)<br>* Anspruch 1; Unteranspruch 7 *<br>& DE - A - 2 016 470<br>-- | 1 | RECHERCHIERTE SACHGEBIETE (Int. Cl.³) |
| A | DE - A - 2 336 777 (BASF) | | D 06 L 3/12<br>C 09 B 67/00<br>C 08 F 261/04<br>291/08 |
| | CHEMICAL ABSTRACTS, Band 85, Nr. 20, November 1976, Seite 41, Nr. 144049a<br>Columbus, Ohio, U.S.A.<br>& JP - A - 76 17295 (KURARAY CO., LTD.) 12-02-1976<br>* Zusammenfassung *<br>-- | 1 | |
| | CHEMICAL ABSTRACTS, Band 85, Nr. 12, 20. September 1976, Seite 44, Nr. 78962q<br>Columbus, Ohio, U.S.A.<br>& JP - A - 76 58490 (KURARAY CO., LTD.) 21-05-1976<br>* Zusammenfassung *<br>-- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| A | FR - A - 2 091 597 (I.C.I.)<br>& DE - A - 2 124 051<br>---- | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 20-11-1981 | MEULEMANS |